(19) Europäisches Patentamt
European Patent Office
Office européen des brevets

(11) **EP 2 373 965 B2**

(12) **NOUVEAU FASCICULE DE BREVET EUROPEEN**
Après la procédure d'opposition

(45) Date de publication et mention de la décision concernant l'opposition:
**16.10.2024 Bulletin 2024/42**

(45) Mention de la délivrance du brevet:
**22.06.2016 Bulletin 2016/25**

(21) Numéro de dépôt: **09801510.0**

(22) Date de dépôt: **08.12.2009**

(51) Classification Internationale des Brevets (IPC):
*G01K 7/42* (2006.01)   *G01K 13/02* (2021.01)

(52) Classification Coopérative des Brevets (CPC):
**G01K 7/42; G01K 13/02; G01K 13/024**

(86) Numéro de dépôt international:
**PCT/FR2009/052449**

(87) Numéro de publication internationale:
**WO 2010/067011 (17.06.2010 Gazette 2010/24)**

(54) **PROCEDE ET SYSTEME D'ESTIMATION D'UNE TEMPERATURE DE VEINE DANS UN TURBOREACTEUR**

VERFAHREN ZUM SCHÄTZEN EINER STRAHLTEMPERATUR IN EINEM STRAHLTRIEBWERK

METHOD FOR ESTIMATING A JET TEMPERATURE IN A JET ENGINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.12.2008 FR 0858381**

(43) Date de publication de la demande:
**12.10.2011 Bulletin 2011/41**

(73) Titulaire: **Safran Aircraft Engines**
**75015 Paris (FR)**

(72) Inventeurs:
• **DJELASSI, Cédrik**
  **F-91630 Marolles en Hurepoix (FR)**
• **GAULLY, Bruno**
  **F-91630 Marolles en Hurepoix (FR)**

(74) Mandataire: **Cabinet Beau de Loménie**
**158, rue de l'Université**
**75340 Paris Cedex 07 (FR)**

(56) Documents cités:
DE-A1- 102006 042 874   US-A- 4 215 412
US-A- 5 080 496   US-A1- 2007 073 525

EP 2 373 965 B2

**Description**

Arrière-plan de l'invention

L'invention se rapporte au domaine général de l'aéronautique.

Elle concerne plus particulièrement l'estimation de paramètres, tels que par exemple la température d'un fluide, dans un turboréacteur d'un aéronef.

L'invention a une application privilégiée mais non limitative dans le domaine des systèmes de régulation et de pilotage de turboréacteurs.

En effet, de façon connue, il est nécessaire, pour réguler et adapter le pilotage d'un turboréacteur aux diverses contraintes d'un vol, d'estimer la température de différents flux gazeux traversant le turboréacteur (on parle de températures de veines). A cette fin, on utilise des capteurs de température tels des sondes ou des thermocouples, positionnés à différents endroits des veines d'écoulement des flux gazeux et adaptés à mesurer la température de ces flux gazeux.

Ces capteurs de température souffrent généralement, lors d'une mesure, d'une certaine inertie, propre à chaque capteur, et qui dépend notamment de la masse ou de la taille de ce capteur. Cette inertie se traduit par un décalage temporel entre le moment où la mesure est réalisée par le capteur et le moment où celui-ci délivre un signal en réponse à cette mesure. On parle « d'effet de trainage » de la mesure. Un tel effet peut provoquer des disfonctionnements du turboréacteur du fait d'une mauvaise adaptation de celui-ci, et ce notamment lors de variations rapides des températures des flux gazeux.

Afin d'éviter un tel disfonctionnement, on peut envisager l'utilisation de capteurs présentant une inertie très faible. Toutefois de tels capteurs sont très coûteux.

Aussi, pour pallier cet inconvénient, il existe des techniques permettant de corriger les signaux de mesure délivrés par un capteur de température, en compensant l'effet de trainage induit par l'inertie de ce capteur. Une telle technique est par exemple décrite dans le document US 5,080,496.

De façon générale, ces techniques s'appuient sur une modélisation numérique de l'inertie du capteur à l'aide d'un filtre paramétré par une estimation de la constante de temps de ce capteur. De façon connue en soi, la constante de temps d'un capteur de mesure caractérise son temps de réponse, c'est-à-dire son inertie.

Pour estimer la constante de temps d'un capteur de température, les techniques de l'art antérieur utilisent des abaques figés, dépendant d'un ou de plusieurs paramètres, comme par exemple le débit d'écoulement du fluide dans lequel se trouve le capteur. Ces abaques indiquent des valeurs moyennes de constantes de temps pour des gabarits de temps de réponse et des conditions prédéterminés. Autrement dit, ils ne tiennent pas réellement compte de la dispersion de l'inertie d'un capteur de température par rapport à un autre.

Or, les technologies de fabrication actuelles ne permettent pas de fabriquer à moindre coût, des capteurs de température pour le pilotage des turboréacteurs qui respectent un gabarit de temps de réponse peu dispersé. Par conséquent, il est difficile d'avoir des abaques adaptés aux différents capteurs de température considérés. Et de nombreux problèmes ont été mis en évidence lorsque les constantes de temps des capteurs embarqués sur un turboréacteur sont éloignées des valeurs données par ces abaques.

Une solution pourrait être de tester chaque capteur de température, par exemple en soufflerie, en vue de déterminer sa constante de temps dans des conditions prédéfinies et d'extrapoler les abaques en fonction de la constante ainsi déterminée. Cependant, un tel test est particulièrement coûteux et représente environ un tiers du prix du capteur de température. Par conséquent, il ne peut être mis en oeuvre pour chaque capteur de température, ce qui signifie qu'un capteur de température en dehors d'un gabarit d'acceptation pour lequel un abaque est disponible, pourrait ne pas être détecté.

En outre, de tels tests sont souvent réalisés pour des débits d'écoulement de fluides limités par les capacités de la soufflerie, et ne permettent pas généralement de couvrir la plage de débits utiles pour les applications d'un turboréacteur. Or, l'extrapolation des abaques de façon à couvrir toute la plage des débits utiles introduit des imprécisions dans la chaîne d'acquisition du capteur de température.

Par ailleurs, comme mentionné précédemment, la constante de temps d'un capteur de température dépend de paramètres tels le débit d'écoulement du fluide dans lequel se trouve le capteur. Cela signifie que pour estimer la constante de temps d'un capteur de température, il est nécessaire, au préalable, d'estimer ce débit d'écoulement de fluide. Par conséquent, la mise en oeuvre d'estimateurs complémentaires sur le turboréacteur est nécessaire, ce qui rend d'autant plus complexe la correction des mesures.

Par conséquent, il existe un besoin d'un procédé d'estimation d'une température de veine d'un turboréacteur, qui soit simple et peu coûteux, et délivre une estimation précise de cette température, afin de pouvoir être utilisée notamment pour la régulation et le pilotage de turboréacteurs.

Objet et résumé de l'invention

La présente invention répond à ce besoin en proposant un procédé d'estimation d'une température de veine dans un turboréacteur, un système d'estimation d'une température de veine dans un turboréacteur, et un turboréacteur, conformes aux revendications indépendantes. Le procédé comprend :

- une étape de modélisation numérique de la température de veine à l'aide d'un signal modélisé ;
- une étape de correction de ce signal modélisé à l'aide d'un signal d'erreur, le signal obtenu après correction représentant une estimation de la température de veine ;

et dans lequel lorsque des conditions prédéterminées relatives à au moins une phase de fonctionnement du turboréacteur et à une stabilité thermique sont vérifiées, le signal d'erreur est mis à jour à partir du signal modélisé et d'un signal de mesure de la température de veine délivré par un capteur de température.

Ainsi, au lieu d'estimer une température de veine d'un turboréacteur au moyen d'une mesure issue d'un capteur corrigée à l'aide d'une estimation de la constante de temps de ce capteur comme dans l'art antérieur, l'invention propose d'estimer cette température de veine en utilisant un modèle numérique corrigé à l'aide d'un signal d'erreur évalué lors d'une phase de stabilité thermique du turboréacteur, dans des conditions prédéterminées relatives à au moins une phase de fonctionnement de ce turboréacteur.

De cette sorte, on évite des calculs coûteux d'estimation de la constante de temps du capteur, ce qui permet d'alléger la charge du calculateur du turboréacteur, c'est-à-dire typiquement du FADEC (Full Authority Digital Engine Control).

L'invention permet d'obtenir une estimation de bonne qualité de la température de veine considérée à faible coût. Le recours à des capteurs de température coûteux présentant une très faible inertie est ainsi évité.

L'invention s'appuie en effet sur des modèles numériques de température de veine existants et connus en soi. De tels modèles numériques offrent généralement une bonne représentation de l'évolution de la température de veine dans un turboréacteur (c'est-à-dire de sa dynamique), mais ne sont pas précis quant aux valeurs « absolues » prises par cette température, i.e., ils présentent une erreur statique par rapport à la température de veine réelle du turboréacteur. L'invention propose de corriger cette erreur statique afin d'obtenir une estimation précise de la température de veine considérée.

A cette fin, elle utilise un signal d'erreur mis à jour lors de phases de stabilité thermique à l'aide d'un signal de mesure issu d'un capteur de température. La détection qu'une condition de stabilité thermique est vérifiée peut être aisément mise en oeuvre, par exemple en comparant la dérivée du signal de mesure délivré par le capteur par rapport à un seuil prédéterminé.

En outre, les exigences de précision et de dynamique du capteur de température utilisé par l'invention sont faibles, le signal de mesure issu du capteur de température n'étant en effet considéré que pour corriger lors d'une phase stabilisée thermiquement, le modèle de température de veine du turboréacteur. On peut donc utiliser des capteurs de température à faible coût, présentant des constantes de temps élevées pourvu que celles-ci soient compatibles avec les phases de stabilité thermique du turboréacteur (autrement dit inférieures à la durée des phases de stabilité thermique du turboréacteur).

Par ailleurs, l'invention prend avantageusement en compte les phases de fonctionnement du turboréacteur. Elle offre ainsi la possibilité d'estimer un signal d'erreur distinct en fonction de la phase de fonctionnement dans laquelle se trouve le turboréacteur. L'erreur statique des modèles numériques existant au cours d'une phase de démarrage peut en effet être différente d'une erreur statique lors d'une phase de fonctionnement « plein gaz ».

Dans un mode particulier de réalisation de l'invention, on met à jour le signal d'erreur à l'aide d'un algorithme adaptatif.

Le signal d'erreur peut notamment être mis à jour à partir du signal obtenu par soustraction du signal modélisé au signal de mesure.

De cette sorte, on obtient une bonne estimation de l'erreur statique que présente le signal modélisé.

En effet, lors d'une phase de stabilité thermique, le capteur de température, même s'il souffre d'une inertie importante, est capable de fournir une bonne représentation « absolue » de la température de veine du turboréacteur qu'il mesure. Cette représentation soustraite à la valeur du signal modélisé sur la phase de stabilité thermique permet donc d'estimer avec précision l'erreur statique que présente le signal modélisé.

La mise à jour du signal d'erreur peut être réalisée à l'aide d'un filtre de type correcteur intégral paramétré par un gain prédéterminé, de préférence non unitaire.

Un tel filtre est connu en soi, et présente de bonnes performances pour la correction du signal modélisé.

En variante, d'autres filtres peuvent être utilisés, tels que par exemple des filtres d'ordres supérieurs. Le choix de l'ordre du filtre considéré pour la mise à jour du signal d'erreur peut résulter d'un compromis entre la précision obtenue et la complexité des calculs mis en oeuvre.

Dans une variante de réalisation, le procédé d'estimation comprend en outre une étape de mémorisation, dans une mémoire non volatile, du dernier signal d'erreur mis à jour avant l'arrêt du turboréacteur.

Cette valeur peut notamment, de façon avantageuse, être utilisée pour initialiser l'algorithme adaptatif de mise à jour du signal d'erreur, plutôt que d'utiliser une valeur initiale prédéterminée (ex. nulle). Celle-ci peut permettre d'accélérer la convergence de l'algorithme adaptatif ou être utilisée comme valeur par défaut du signal d'erreur en attendant de détecter une phase de stabilité thermique, suite au redémarrage du turboréacteur.

Corrélativement, l'invention vise également un système d'estimation d'une température de veine d'un turboréacteur comprenant :

- des moyens de modélisation numérique de cette température de veine à l'aide d'un signal modélisé ;
- des moyens de correction de ce signal modélisé à l'aide d'un signal d'erreur, le signal obtenu après correction représentant une estimation de la température de veine ;

- des moyens de mise à jour du signal d'erreur activés lorsque des conditions prédéterminées relatives à au moins une phase de fonctionnement du turboréacteur et à une stabilité thermique sont vérifiées, à partir du signal modélisé et d'un signal de mesure de la température de veine délivré par un capteur de température.

L'invention vise également un turboréacteur comportant au moins un système d'estimation d'une température de veine de ce turboréacteur tel que décrit précédemment.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système d'estimation d'une température de veine d'un turboréacteur conforme à l'invention, dans un mode particulier de réalisation ;
- la figure 2 représente, sous forme schématique, un exemple de module de modélisation numérique pouvant être utilisé dans le système d'estimation représenté sur la figure 1 pour modéliser la température de veine ;
- la figure 3 représente, sous la forme d'un organigramme, les principales étapes mises en oeuvre pour évaluer le signal d'erreur utilisé pour corriger le signal modélisé au cours du procédé d'estimation selon l'invention, dans un mode particulier de réalisation et lorsqu'il est mis en oeuvre par le système représenté sur la figure 1;
- la figure 4 représente, sous forme schématique, un exemple de moyens pouvant être mis en oeuvre pour évaluer le signal d'erreur utilisé pour corriger le signal modélisé au cours du procédé d'estimation selon l'invention, dans un mode particulier de réalisation et lorsqu'il est mis en oeuvre par le système représenté sur la figure 1 ; et
- la figure 5 représente, sous forme schématique, un exemple de moyens de détection d'une condition de stabilité thermique pouvant être mis en oeuvre au cours du procédé d'estimation selon l'invention.

Description détaillée d'un mode de réalisation

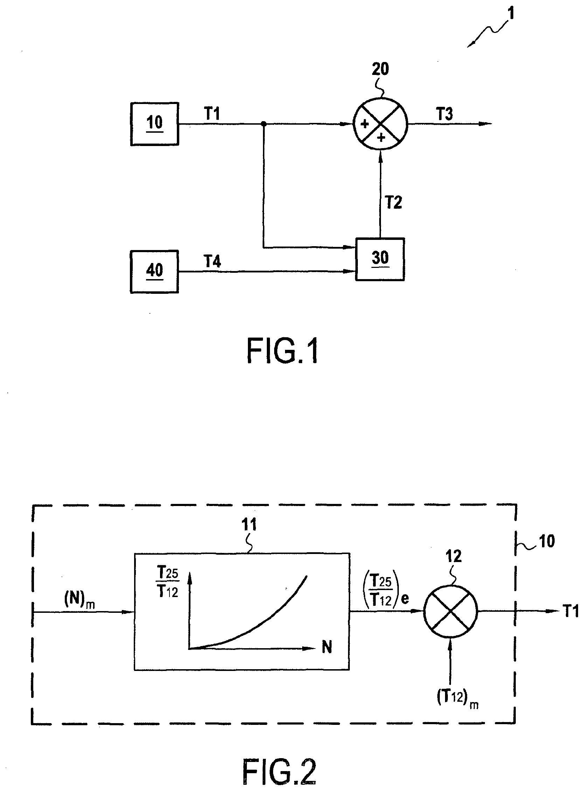

La figure 1 représente, dans un mode particulier de réalisation, un système 1 d'estimation d'une température de veine d'un turboréacteur d'un avion (non représenté sur la figure), conforme à l'invention.

La température de veine estimée peut être utilisée notamment pour la régulation et le pilotage du turboréacteur. Ainsi, dans le mode de réalisation décrit ici, tout ou partie du système d'estimation 1 est couplé ou intégré au dispositif de régulation pleine autorité de l'avion propulsé par le turboréacteur, également connu sous le nom de FADEC (Full Authority Digital Engine Control).

Toutefois, bien entendu, d'autres utilisations de la température de veine estimée à l'aide du procédé selon l'invention peuvent être envisagées.

Dans l'exemple décrit ici, on envisage l'estimation de la température de veine $T_{25}$ en entrée du compresseur haute-pression du turboréacteur.

Conformément à l'invention, le système d'estimation 1 comprend un module de modélisation numérique 10, utilisé pour modéliser la température de veine $T_{25}$.

Le signal T1 délivré par le module de modélisation numérique 10 est ensuite envoyé vers un module de correction 20, adapté à ajouter au signal modélisé T1 un signal d'erreur T2.

Le signal T3 obtenu après correction représente une estimation de la température de veine $T_{25}$ dans le turboréacteur, destinée ici à être utilisée pour le pilotage et la régulation du turboréacteur.

Le signal d'erreur T2, ajouté par le module de correction 20 au signal modélisé T1, est évalué par un module de calcul 30 à partir d'une part, du signal modélisé T1, et d'autre part, d'un signal de mesure T4 de la température de veine $T_{25}$, délivré par un capteur de température 40 situé dans le turboréacteur. La structure et le fonctionnement d'un tel capteur de température sont connus en soi et ne seront pas décrits plus en détails ici.

Nous allons maintenant décrire, en référence à la figure 2 un exemple de réalisation du module de modélisation numérique 10. Un tel module est décrit notamment dans le document US 5,080,496.

Selon l'exemple représenté sur la figure 2, le module de modélisation numérique 10 comprend une entité 11 adaptée à délivrer une estimation du rapport de températures $T_{25}/T_{12}$, notée $(T_{25}/T_{12})_e$, à partir d'une mesure $(N)_m$ de la vitesse de rotation de la soufflante du turboréacteur, $T_{12}$ désignant la température à l'entrée de cette soufflante.

Cette estimation est calculée par l'entité 11 à l'aide d'une courbe prédéterminée représentant l'évolution du rapport adiabatique de températures $T_{25}/T_{12}$ en fonction de la vitesse de rotation N de la soufflante. Une telle courbe est connue de l'homme du métier et ne sera pas décrite plus en détails ici.

L'estimation du rapport $T_{25}/T_{12}$ est ensuite envoyée vers un circuit multiplicateur 12, adapté à multiplier ce rapport par une mesure de la température $T_{12}$, notée $(T_{12})_m$. On obtient ainsi, en sortie du circuit multiplicateur 12, le signal T1 modélisant la température de veine $T_{25}$.

La mesure $(T_{12})_m$ de la température $T_{12}$ et la mesure $(N)_m$ de la vitesse de rotation de la soufflante sont obtenues à l'aide de capteurs situés dans le turboréacteur connus en soi, et qui ne seront pas détaillés davantage ici.

En variante, un modèle numérique plus élaboré et plus précis de la température de veine $T_{25}$ peut être utilisé. Un tel modèle est décrit notamment dans le document US 5,080,496.

On notera, que dans l'exemple décrit ici, on considère la correction d'un signal modélisé représentatif de la température $T_{25}$. Toutefois, l'invention s'applique à d'autres températures de veine dans le turboréacteur, à condition de disposer d'un modèle d'évolution de ces températures.

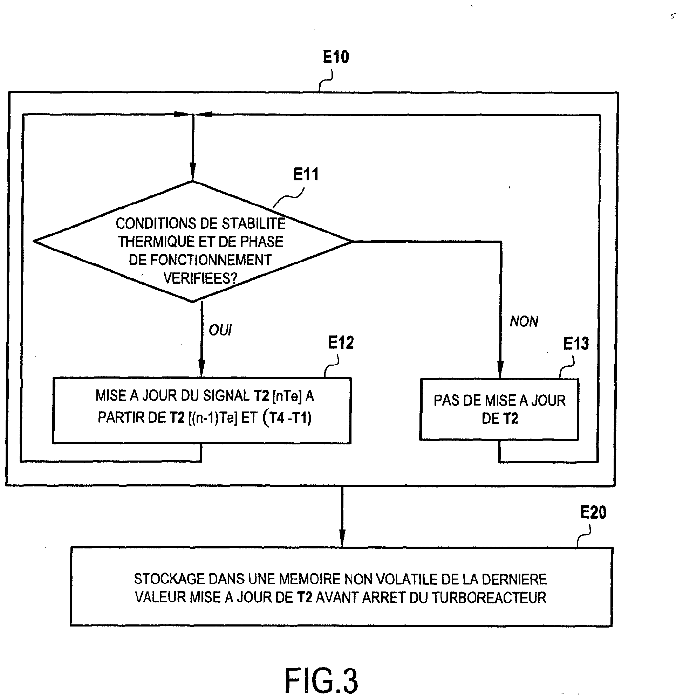

Nous allons maintenant décrire, en référence à la figure 3, les principales étapes mises en oeuvre par le module de calcul 30 pour l'évaluation du signal d'erreur T2 utilisé au cours du procédé d'estimation selon l'invention, dans un mode particulier de réalisation de l'invention.

Dans la suite de la description, on considère des signaux et des paramètres échantillonnés à une période d'échantillonnage *Te*. On notera que l'invention peut également être mise en oeuvre avec des signaux et des paramètres continus.

Conformément à l'invention, durant le fonctionnement du turboréacteur (E10), le module de calcul 30 met à jour le signal d'erreur T2 à partir du signal modélisé T1 et du signal de mesure T4, lorsque des conditions prédéterminées relatives à une stabilité thermique et à au moins une phase de fonctionnement du turboréacteur sont vérifiées.

De façon plus précise, dans le mode de réalisation envisagé ici, lorsque ces conditions sont vérifiées (étape E11), le signal d'erreur T2 est évalué à un instant donné t=$nTe$ (n étant un entier, *Te* désignant la période d'échantillonnage), à l'aide d'un filtre adaptatif de type correcteur intégral selon l'équation suivante (étape E12) :

$$T2[nTe] = T2[(n\text{-}1)Te] + K \times \varepsilon[nTe],$$

dans laquelle :

$$\varepsilon[nTe] = T4[nTe] - T1[nTe],$$

et :

- K est un nombre réel prédéterminé désignant le gain du filtre correcteur intégral ;
- $T2[nTe]$, $\varepsilon[nTe]$, $T4[nTe]$ et $T1[nTe]$ désignent respectivement le signal d'erreur T2, le signal $\varepsilon$, le signal de mesure T4 et le signal modélisé T1 échantillonnés à l'instant $nTe$.

En variante, des filtres d'ordres supérieurs peuvent être utilisés pour l'évaluation du signal T2.

Lorsque l'on détermine que l'une et/ou l'autre des conditions précitées n'est ou ne sont pas vérifiée(s) (étape E11), la dernière valeur mise à jour du signal d'erreur T2 est utilisée par le module de correction 20 pour corriger le signal modélisé T1 (étape E13). Autrement dit, de façon équivalente :

$$T2[nTe] = T2[(n\text{-}1)Te].$$

On notera que dans le mode de réalisation décrit ici, on mémorise, avant l'arrêt du turboréacteur, la dernière valeur mise à jour du signal d'erreur T2 (étape E20), notée V2f, dans une mémoire non volatile du FADEC (non représentée sur la figure 1). Une telle mémoire est connue en soi et ne sera pas détaillée davantage ici.

La valeur V2f ainsi mémorisée pourra être utilisée de façon avantageuse lors d'un prochain fonctionnement du turboréacteur, pour initialiser le filtre correcteur intégral.

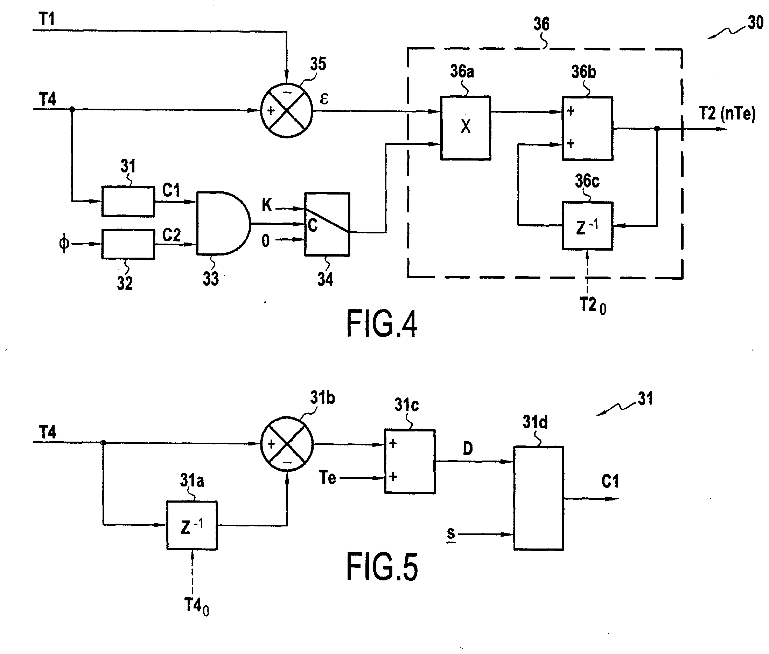

Nous allons maintenant décrire, en référence à la figure 4, un exemple de moyens mis en oeuvre par le module de calcul 30 pour la réalisation des étapes E11 à E13 représentées sur la figure 3.

Au sens de l'invention, on considère qu'une condition de stabilité thermique est vérifiée si la température de veine considérée, à savoir ici la température $T_{25}$, est stable sur une période de temps prédéterminée, autrement dit, si elle ne varie pas ou varie peu sur cette période (dans les limites d'une valeur de seuil prédéfinie).

En outre, au sens de l'invention, on considère qu'une condition relative à au moins une phase de fonctionnement du turboréacteur est vérifiée si le turboréacteur se trouve dans l'une au moins de ces phases de fonctionnement.

Dans le mode de réalisation décrit ici, pour vérifier si les deux conditions précitées sont respectées, on procède séparément à l'examen de ces deux conditions à l'aide de deux modules distincts, à savoir :

- la condition de stabilité thermique est examinée par un premier module de vérification 31 ; et
- la condition relative à au moins une phase de fonctionnement du turboréacteur est examinée par un second module de vérification 32.

Un exemple de module de vérification 31 adapté à examiner si une condition de stabilité thermique est respectée est représenté sur la figure 5 et décrit maintenant.

Pour vérifier si une condition de stabilité thermique est respectée, le module de vérification 31 calcule un signal D représentatif de la dérivée du signal de mesure T4 délivré par le capteur de température 40 à l'instant t=$nTe$.

Le signal D est évalué ici à l'aide d'un filtre d'ordre 1 selon l'équation suivante :

$$D[nTe] = \frac{T4[nTe] - T4[(n-1)Te]}{Te},$$

dans laquelle D[*nTe*], respectivement T4[*nTe*], représente le signal D, respectivement le signal T4, échantillonné à l'instant *nTe* (on notera qu'à l'instant t=0, T4[0] est pris égal à une valeur initiale prédéfinie $T4_0$).

A cette fin, de façon connue, le module de vérification 31 comprend :

- une cellule de retard 31a délivrant la valeur du signal de mesure T4 à l'instant précédent *(n-1)Te* ;
- un élément soustracteur 31b permettant de soustraire le signal de mesure retardé T4[*(n-1)Te*] au signal de mesure *T4[nTe]* ; et
- un élément diviseur 31c adapté à diviser la sortie de l'élément 31b par la période d'échantillonnage *Te*.

En variante, la dérivée D du signal T4 à l'instant t=*nTe* peut être calculée à l'aide d'un filtre d'ordre supérieur.

La valeur de D[*nTe*] obtenue en sortie de l'élément diviseur 31c est ensuite comparée à une valeur de seuil s̲ prédéfinie, par un comparateur 31d du module de vérification 31. La valeur de seuil s̲ représente la valeur de la dérivée de la température à partir de laquelle on considère que la température est stable, c'est-à-dire, à partir de laquelle on considère que le turboréacteur se trouve dans une phase de stabilité thermique.

Le comparateur 31d est adapté à délivrer ici :

- un signal C1 égal à 1, si la valeur de D[*nTe*] est inférieure ou égale à la valeur de seuil s̲ ; et
- un signal C1 égal à 0, si la valeur de D̲[*nTe*] est supérieure à la valeur de seuil s̲.

Le second module de vérification 32 vérifie, quant à lui, si le turboréacteur se trouve dans une phase de fonctionnement particulière prédéfinie, comme par exemple dans une phase « démarrage » ou « plein gaz ».

En effet, le signal d'erreur T2 à considérer pour corriger le signal modélisé T1 n'est pas nécessairement le même selon la phase de fonctionnement dans laquelle se trouve le turboréacteur.

Ainsi, s'il existe une différence entre les corrections à apporter au signal modélisé durant diverses phases de fonctionnement prédéfinies du turboréacteur, tel que par exemple durant une phase P1 de démarrage et une phase P2 de fonctionnement « plein gaz » du turboréacteur, le signal de correction T2 sera mis à jour pendant chacune de ces deux phases. Dans ce cas, le second module de vérification 32 vérifie si la phase de fonctionnement en cours du turboréacteur, notée φ, identifiée par le FADEC selon des moyens connus en soi, et transmise au module de vérification 32, est égale à la phase P1 ou à la phase P2. Le cas échéant, le module de vérification 32 délivre un signal C2 égal à 1. Si la phase de fonctionnement φ en cours est distincte de P1 et de P2, alors le module de vérification 32 délivre un signal C2 égal à 0.

Au contraire, si on détermine, par exemple au cours de tests de fonctionnement préalables réalisés sur le turboréacteur ou sur un turboréacteur de mêmes caractéristiques, qu'une correction similaire doit être apportée au cours des phases P1 et P2 du turboréacteur, alors il est possible de ne mettre à jour le signal de correction T2 que pendant l'une de ces phases, par exemple pendant la phase P1.

Ainsi, dans ce cas, le second module de vérification 32 vérifie si la phase de fonctionnement φ en cours du turboréacteur transmise par le FADEC au second module de vérification 32, est égale à la phase P1. Le cas échéant, le module de vérification 32 délivre un signal C2 égal à 1. Si la phase de fonctionnement φ en cours est distincte de P1, alors le module de vérification 32 délivre un signal C2 égal à 0.

Dans l'exemple donné ici on considère deux phases de fonctionnement P1 et P2 du turboréacteur. Bien entendu d'autres phases pourraient être considérées.

Une porte logique ET 33, dont les entrées sont les signaux C1 et C2, permet alors de vérifier si les deux conditions relatives respectivement à une stabilité thermique et à au moins une phase de fonctionnement du turboréacteur sont respectées. La sortie C de la porte logique 33 est égale à 1 si C1 et C2 sont identiques et égales à 1 (i.e. si les deux conditions précitées sont respectées), et à 0 sinon.

Le signal C délivré par la porte logique 33 conditionne la sortie d'un module 34 de la façon suivante :

- si C est égal à 1, la sortie du module 34 est égale au gain réel K du filtre correcteur intégral utilisé pour mettre à jour le signal d'erreur T2 introduit précédemment ;
- sinon, la sortie du module 34 est égale à zéro.

En parallèle de la vérification des conditions relatives à la stabilité thermique et à au moins une phase de fonctionnement du moteur, un module soustracteur 35 évalue le signal ε[*nTe*] à l'instant t=*nTe*, en soustrayant au signal de mesure T4 délivré par le capteur de température 40, le signal modélisé T1 issu du modèle numérique 10, selon l'équation suivante :

$$\varepsilon[nTe] = T4[nTe] - T1[nTe].$$

Le signal ε ainsi que la sortie du module 34 sont ensuite fournis à un filtre 36. Le filtre 36 comprend :

- un élément multiplieur 36a, adapté à multiplier le signal ε[*nTe*] par la sortie du module 34. Autrement dit, l'élément multiplieur 36a multiplie le signal ε[*nTe*] par le gain K si les conditions relatives à une stabilité thermique et à au moins une phase de fonctionnement sont vérifiées, et par zéro sinon ;
- une cellule de retard 36c délivrant la valeur T2[*(n-*

1)Te]; et

- un élément additionneur 36b adapté à calculer la valeur T2[*nTe*] selon l'équation indiquée précédemment.

On notera, qu'à l'instant *t=0* (i.e. pour n=0), on prendra comme valeur initiale du signal d'erreur T2[0] = $T2_0$, où $T2_0$ est une valeur prédéfinie.

Dans le mode de réalisation décrit ici, on utilise comme valeur initiale $T2_0$, la valeur V2f mémorisée dans la mémoire non volatile du FADEC lors d'un fonctionnement précédent du turboréacteur.

En variante, la valeur initiale $T2_0$ peut être prise égale à 0.

On notera que, de façon connue en soi, le choix de la valeur initiale $T2_0$, de la période d'échantillonnage *Te* et de la valeur du gain K résulte d'un compromis entre performance et rapidité de convergence de l'algorithme adaptatif mis en oeuvre pour la mise à jour du signal T2.

## Revendications

1. Procédé d'estimation d'une température de veine dans un turboréacteur, comprenant :

    - une étape de modélisation numérique (10) de la température de veine à l'aide d'un signal modélisé (T1) ;
    - une étape de correction (20) de ce signal modélisé à l'aide d'un signal d'erreur (T2), le signal obtenu après correction (T3) représentant une estimation de la température de veine ;
    et **caractérisé en ce que** le signal d'erreur (T2) est mis à jour (E20) lorsque l'on détecte que des conditions prédéterminées relatives à au moins une phase de fonctionnement du turboréacteur et à une stabilité thermique sont vérifiées, à partir du signal modélisé (T1) et d'un signal de mesure (T4) de la température de veine délivré par un capteur de température (40), à l'aide d'un filtre d'ordre supérieur ou égal à 1, le signal d'erreur mis à jour étant obtenu en sortie du filtre, dans lequel la température de veine estimée est destinée à être utilisée pour la régulation et le pilotage du turboréacteur, et dans lequel la condition de stabilité thermique est vérifiée si la température de veine est stable sur une période de temps prédéterminée.

2. Procédé d'estimation selon la revendication 1, dans lequel on met à jour le signal d'erreur (T2) à l'aide d'un algorithme adaptatif.

3. Procédé d'estimation selon la revendication 2, comprenant en outre une étape de mémorisation (E40), dans une mémoire non volatile, du dernier signal d'erreur mis à jour avant l'arrêt du turboréacteur.

4. Procédé d'estimation selon la revendication 3, dans lequel on utilise pour initialiser l'algorithme adaptatif un signal d'erreur mémorisé dans la mémoire non volatile.

5. Procédé d'estimation selon l'une quelconque des revendications 2 à 4 dans lequel on met à jour (E20) le signal d'erreur (T2) à l'aide d'un filtre de type correcteur intégral paramétré par un gain prédéterminé (K).

6. Procédé d'estimation selon l'une quelconque des revendications 2 à 5, dans lequel on met à jour (E20) le signal d'erreur (T2) à partir d'un signal (ε) obtenu par soustraction du signal modélisé (T1) au signal de mesure (T4).

7. Procédé d'estimation selon l'une quelconque des revendications 1 à 6, dans lequel on détecte (E10) qu'une condition de stabilité thermique est vérifiée en comparant la dérivée (D) du signal de mesure (T4) délivré par le capteur (40) par rapport à un seuil prédéterminé (s).

8. Système d'estimation (1) d'une température de veine d'un turboréacteur comprenant :

    - des moyens de modélisation numérique (10) de cette température de veine à l'aide d'un signal modélisé (T1) ;
    - des moyens de correction (20) de ce signal modélisé (T1) à l'aide d'un signal d'erreur (T2), le signal (T3) obtenu après correction représentant une estimation de la température de veine ;
    **caractérisé en ce que** le système comprend
    - des moyens de vérification (31,32) si des conditions prédéterminées relatives à au moins une phase de fonctionnement du turboréacteur et à une stabilité thermique sont vérifiées ; et
    - des moyens de mise à jour (30) du signal d'erreur, activés lorsque les moyens de vérification détectent que lesdites conditions prédéterminées sont vérifiées, à partir du signal modélisé (T1) et d'un signal de mesure (T4) de la température de veine délivré par un capteur de température (40), à l'aide d'un filtre d'ordre supérieur ou égal à 1, le signal d'erreur mis à jour étant obtenu en sortie du filtre,

    la température de veine estimée étant destinée à être utilisée pour la régulation et le pilotage du turboréacteur, et la condition de stabilité thermique étant vérifiée si la température de veine est stable sur une période de temps prédéterminée.

9. Turboréacteur **caractérisé en ce qu'**il comporte au moins un système (1) d'estimation d'une température de veine selon la revendication 8.

**Patentansprüche**

1. Verfahren zum Schätzen einer Stromtemperatur in einem Turbostrahltriebwerk, umfassend:

   - einen Schritt eines numerischen Modellierens (10) der Stromtemperatur mittels eines modellierten Signals (T1);
   - einen Schritt eines Korrigierens (20) dieses modellierten Signals mittels eines Fehlersignals (T2), wobei das Signal (T3), das nach einer Korrektur erlangt wird, eine Schätzung der Stromtemperatur darstellt;
   und **dadurch gekennzeichnet, dass** das Fehlersignal (T2) aktualisiert wird (E20), wenn anhand des modellierten Signals (T1) und eines Messsignals (T4) der Stromtemperatur, das von einem Temperatursensor (40) bereitgestellt wird, mittels eines Filters einer Ordnung größer als oder gleich wie 1, festgestellt wird, dass vorbestimmte Bedingungen in Bezug auf mindestens eine Betriebsphase des Turbostrahltriebwerks und eine thermische Stabilität erfüllt sind, wobei das aktualisierte Fehlersignal am Ausgang des Filters erlangt wird,
   wobei die geschätzte Stromtemperatur dazu bestimmt ist, um zur Regelung und Steuerung des Turbostrahltriebwerks verwendet zu werden, und
   wobei die Bedingung der thermischen Stabilität erfüllt ist, wenn die Stromtemperatur über eine vorbestimmte Zeitdauer stabil ist.

2. Schätzverfahren nach Anspruch 1, wobei das Fehlersignal (T2) mittels eines adaptiven Algorithmus aktualisiert wird.

3. Schätzverfahren nach Anspruch 2, ferner umfassend einen Schritt eines Speicherns (E40), in einem nichtflüchtigen Speicher, des letzten aktualisierten Fehlersignals vor dem Abschalten des Turbostrahltriebwerks.

4. Schätzverfahren nach Anspruch 3, wobei zum Initialisieren des adaptiven Algorithmus ein Fehlersignal verwendet wird, das in dem nichtflüchtigen Speicher gespeichert ist.

5. Schätzverfahren nach einem der Ansprüche 2 bis 4, wobei das Fehlersignal (T2) mittels eines Filters vom Typ integraler Korrektor aktualisiert wird (E20), der durch eine vorbestimmte Verstärkung (K) parametriert ist.

6. Schätzverfahren nach einem der Ansprüche 2 bis 5, wobei das Fehlersignal (T2) anhand eines Signals (ε) aktualisiert wird (E20), das durch Subtraktion des modellierten Signals (T1) von dem Messsignal (T4) erlangt wird.

7. Schätzverfahren nach einem der Ansprüche 1 bis 6, wobei festgestellt wird (E10), dass eine Bedingung der thermischen Stabilität erfüllt ist, indem die Ableitung (D) des von dem Sensor (40) bereitgestellten Messsignals (T4) mit einem vorbestimmten Schwellenwert (s) verglichen wird.

8. Schätzsystem (1) einer Stromtemperatur eines Turbostrahltriebwerks, umfassend:

   - numerische Modellierungseinrichtungen (10) dieser Stromtemperatur mittels eines modellierten Signals (T1);
   - Korrektureinrichtungen (20) dieses modellierten Signals (T1) mittels eines Fehlersignals (T2), wobei das Signal (T3), das nach einer Korrektur erlangt wird, eine Schätzung der Stromtemperatur darstellt;
   - **dadurch gekennzeichnet, dass** das System Folgendes umfasst
   - Überprüfungseinrichtungen (31, 32), ob vorbestimmte Bedingungen in Bezug auf mindestens eine Betriebsphase des Turbostrahltriebwerks und eine thermische Stabilität erfüllt sind; und
   - Aktualisierungseinrichtungen (30) des Fehlersignals, die aktiviert werden, wenn die Überprüfungseinrichtungen anhand des modellierten Signals (T1) und eines Messsignals (T4) der Stromtemperatur, das von einem Temperatursensor (40) bereitgestellt wird, mittels eines Filters einer Ordnung größer als oder gleich wie 1, feststellen, dass die vorbestimmten Bedingungen erfüllt sind, wobei das aktualisierte Fehlersignal an dem Ausgang des Filters erlangt wird,
   wobei die geschätzte Stromtemperatur dazu bestimmt ist, um zur Regelung und Steuerung des Turbostrahltriebwerks verwendet zu werden, und
   wobei die Bedingung der thermischen Stabilität erfüllt ist, wenn die Stromtemperatur über eine vorbestimmte Zeitdauer stabil ist.

9. Turbostrahltriebwerk, **dadurch gekennzeichnet, dass** es mindestens ein System (1) zur Schätzung einer Stromtemperatur nach Anspruch 8 umfasst.

**Claims**

1. A method for estimating a stream temperature in a turbojet, the method comprising:

   - a step for digitally modeling (10) the stream temperature based on of a modeled signal (T1);
- a step for correcting (20) this modeled signal using an error signal (T2), the signal obtained after correction (T3) representing an estimate of the stream temperature; and **characterized in that** the error signal (T2) is updated (E20) when it is detected that predetermined conditions relative to at least one operating phase of the turbojet and temperature stability are verified, from the modeled signal (T1) and a measurement signal (T4) of the stream temperature delivered by a temperature sensor (40), using a filter of order greater than or equal to 1, the updated error signal being obtained at the output of the filter, wherein the estimated stream temperature is intended to be used for the regulation and control of the turbojet, and wherein the temperature stability condition is verified if the stream temperature is stable over a predetermined time period.

2. The estimating method according to claim 1, wherein the error signal (T2) is updated based on an adaptive algorithm.

3. The estimating method according to claim 2, further comprising a step for storing (E40), in a non-volatile memory, the most recent updated error signal before stopping the turbojet.

4. The estimating method according to claim 3, wherein an error signal stored in the non-volatile memory is used to initialize the adaptive algorithm.

5. The estimating method according to any one of claims 2 to 4, wherein the error signal (T2) is updated (E20) using a filter of the integral corrector type configured by a predetermined gain (K).

6. The estimating method according to any one of claims 2 to 5, wherein the error signal (T2) is updated (E20) from a signal ($\varepsilon$) obtained by subtracting the modeled signal (T1) from the measurement signal (T4).

7. The estimating method according to any one of claims 1 to 6, wherein it is detected (E10) that a temperature stability condition is verified by comparing the derivative (D) of the measurement signal (T4) delivered by the sensor (40) relative to a predetermined threshold (s).

8. A system (1) for estimating a stream temperature of a turbojet, comprising:

   - means for digitally modeling (10) this stream temperature using a modeled signal (T1);

   - means for correcting (20) this modeled signal (T1) using an error signal (T2), the signal (T3) obtained after correction representing an estimate of the stream temperature;

   **characterized in that** the system comprises
   - means for verifying (31, 32) whether predetermined conditions relative to at least one operating phase of the turbojet and temperature stability are verified; and
   - means for updating (30) the error signal, activated when the verification means detect that said predetermined conditions are verified, from the modeled signal (T1) and a measurement signal (T4) of the stream temperature delivered by a temperature sensor (40), using a filter of order greater than or equal to 1, the updated error signal being obtained at the output of the filter,

      the estimated stream temperature being intended to be used for the regulation and control of the turbojet, and the temperature stability condition being verified if the stream temperature is stable over a predetermined period of time.

9. A turbojet, **characterized in that** it comprises at least one system (1) for estimating a stream temperature according to claim 8.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5080496 A